# EUROPEAN PATENT APPLICATION

(11) **EP 3 000 939 A1**
(43) Date of publication of application: **30.03.2016**
(21) Application number: 14425117.0
(22) Date of filing: 23.09.2014
(51) Int. Cl.: E02B 3/06

(54) **Structured stereotype element for dissipation of fluid energy**

(71) Applicant: La Spada, Francesco, 98122 Messina (IT); La Spada, Antonino, 98122 Messina (IT)
(72) Inventor: La Spada, Francesco, 98122 Messina (IT); La Spada, Antonino, 98122 Messina (IT)
(74) Representative: Robba, Pierpaolo

(57) **Abstract**

The invention of the stereotype named "maglia"(element) concerning the structural field has the function of the fraction of fluctuating liquid energy.

In particular in the field of the sea waves in their stage of propagation and fraction.

The geological and dimensional characteristics of the stereotype provokes the destruction of the typical parameters of the energy impinging the waves motion.

The remaining energy of the liquid bulk projected in of the functional desired results, passing the structure with a together of its structured propagation concerning the littoral components. The main duty of the "maglia"(element) is the formation of "netting" breakwaters of the permeable kind with the installation of a together of the "maglie" (elements) being under water or partially or completely emerging the sea level.

## Description

### Field of the invention

The presented invention prevailing refers to, but not only, the appliances reducing the energy of a moving fluid and especially to the energy caused by the sea waves.

The discovery concerns mainly the sector of breakwater elements, but the invention isn't limited to this only special use.

### Technical conditions

Actually there are many breakwater elements but our stereotype is different from all the others in form and purpose.

The current technology with just some exceptions forsees mainly installations made of non permeable cliffs in form of concrete, calcerous, or also lava rocks.

All of these non permeable solutions providing a reflective impact on the wave motion will support the well - known negative effects on the sea environment.

Particularly the effect of the "maglia" (element) underwater with its characteristic, dimensional configuration the peculiarity of meteo - marinal and geological aspects eliminating the negative aspects caused by the wave motion. Moreover the destructive effect of the "maglia" (element) lets the wave slowly pant to the water - line.

The "maglia" (element) doesn't cause any reflective erosion of the sea shore.

The invention consists of a three - lobe structured figure named "maglia" (element) characterized of a combination of surfaces extending the main structured build being able to provoke the dissipation of moving fluids.

### Purpose of the "maglia" (element)

Particularly the intrinsic function of the "maglia" (element) is to provoke the destructive potential of a bulk of dynamic water by impinging into a wave motion with its dimensional energetic parameters of its dynamic modifying effect.

In the stage of the propagation the impinging bulk of water touching the surfaces of the "maglia" (element) is decomposed in fluent liquids undergoing the diversion of their original rules of propagation.

This effects are reflected in all floors of the entire height of the "maglia" (element).

Moreover, it produces sensitive effects on the reduction of the velocity of the propagation. The three- dimensional decomposability of the fluids implicates all of the fluid bulk and its structure in motion.

The "maglia" (element) working with the contrast of the wave movement performs an active, controlled, and variable function by modifying the characteristic parameters intervening the determination of the kinetical and potential energy of the wave motion and its velocity of propagation emphasizing the friction between the fluent contiguous particles and also between them and the superficial of the "maglia" (element).

The effort of the necessary capital for the realization, running and maintenance of "maglia" (element) is reduced compared to other current artificial cliffs, where the profit of the investment is limited drastically concerning the costs and benefits of the system.

So the purpose of this invention is to exceed or improve one or more disadvantages caused by other techniques realized up to now, or at least to provide an useful alternative.

### Description of the invention

The prototype consists of a modular three - lobed structure (tav.2) named "maglia" (element) characterized of the combination of a mix of surfaces protruding out the main build being able to provoke the dissipation of moving fluids.

La "maglia" (element) is shaped in the style of airfoil surfaces (tav.1) permitting the fluid tides of the impinging bulks to enfold the structure, amortizing the energy by structuring a "netting" (tav.5) with stabilization of the structure itself.

The purpose of the "maglia" (element) lies in its specific position in reducing the energy of the wave mode running over a determined coast.

In this function the particular effect will be purchasing the entire surfaces of the circulation in the stage of diversion and an elasticity concerning the design of the respective location and the desired effects and the peculiarity meteo - marinal.

The shape of the maglia (element) with its lateral fins (tav 1 and 3) continues to protruding out the structure not only just to refract the wave but also for the entire bulk of propagation and underlying pseudo statics this concerning to its destruction could behave like an attrited bulk underlying the height of the waves with ulterior restrictive effects on refracting energy.

They stabilize themselves in the sine of the liquid bulk encountering towards the structure in a manner of irregular lively whirling, with dissipation of the energy, until the liquid bulk is so restructured by the refracting that the balance of the wave's profile is absolutely modified.

The transported energy of the high wave will be weakened in a first impact by traversing the refracting structure because then in the following secondly provoked refractions on the sea bottom evolution in proximity of the water's edge in which the intensity of the liquid bulk won't be sufficient enough to guarantee the balance of the peak of the wave's profile.

The following diversion of the liquid provoked particles in the stage of a permeable impact produces the friction between the adjoining particles restructuring real period of the affected wave, the velocity and the energy potential. (tab. 1,2,3, and 4)

The sections of the position of the "maglie" (elements) in function of the refracting of the wave motion will be modulated to their connection to the peculiarity meteo - marinal of the landmark's wave motion.

For the underwater solutions (tav. 4) it is considered a marginal reducing effect due to the flowing on the surfaces of the refracting structure having the priority task to diverse the liquid particles of the affected bulk and to restructure the affected liquid bulk.

The destruction of the wave motion energy depends on these three concrete actions:
- The restructuring of the liquid bulk which passes through the permeable structure
- Impinging action on the surfaces of the structure
- The action of the sea bottom's friction

### - The littoral transport

Guaranteeing the coastal transport will be that transverse and also the longitudinal, it is particular qualified of the element's position on the ocean floor protecting the coast and for keeping a balance in the littoral zone.

The totality permeability for the waves motion of the refracting structure isn't a barrier for the transport of littorals to and from the littoral zone so it could be used also in a system for high and rough sea.

For the use of the maglia (element) in an opera refracting not the wave's reflection is from interest but the demolition of its energy and the transport of inert in a suspension of material carried to the coast.

The permeability of the refracting structure isn't a barrier for the littoral transport but allows the interaction with the remaining on the ground of the waves motion back to the littoral zone so that the nature is born again according to the periodic stage of evolutionary increase or decrease of the water - edge.

### - The underwater task of the maglia (element) refracting

The characterized effect is composed by the permeability of the refracting structure reducing the energy of the waves motion, not by exclusively caused in the flow of the wave's peak on the composed dyke of a mass non permeable structured elements between them being stucked, however the characteristic factors are in a together of the effects permeability and destruction of the affected bulk of water.

This destruction of the characteristic parameters of the wave's motion: velocity, period, the height of energy included the entire front in the waves motion includes a certain defining of a zone of stillness furthermore like a function for an effective transverse littoral transport.
- The effect of the "maglia" (element) in a berm underwater
- Sensitive reduction of the reflection of the bulk affecting on the structure underwater
- Absence of wave's lateral expansion
- Distribution of the inerts in the inner of the structure underwater without "tomboli" at the back of the structure.
- Significant dimensional containment of the materials compared to traditional underwater rocks and/or equal structures

The application of the stereotype "maglia" (element) works with the formation of "netting" allowing the creation of interactive effects between various "maglie" (elements), with the aim to determine with their acting together a destructing controlled effect on the affected liquid bulk both in "netting" of the "maglie" (elements) (tav. 5) partially or totally emergent objects, In the case of a dynamic fluid bulk in a waves motion, for achieving a destructing projected effect also in the conditions of the elements underwater as well as partially emerging.

The "maglia" (element) that structured modular element of an open "netting", provokes these destructing effects on the affected liquid bulk projected of a dimensional maintaining peculiarity the following unfolds all of the meteo - marinal functions:

The capacity of the flowing littoral, transporting of the inerts, the water edge effect on the remaining wave, the hydro circulations etc.

Some applications contribute further the dissipation of the energy of the waves motion transforming it in electrical energy, the "maglia" (element) can be realized in a cave form, with an opening to determine a whole column of fluctuating water, that could be used for the production of electrical energy out of the waves motion (tav.6); moreover it could be used in an extracting form, underwater, with a superior opening and connected to a channel using the system of communicating elements generating an OWC system used for the production of energy. (tav.7)

An ulterior application contributing even the reduction of the waves motion energy by creating further surfaces of the friction, realizing the inferior part of the stereotype under the level of the protruding surfaces (tav.8), a sequence of particular longitudinal gravity of various forms, suitable for placing and the reproduction of marinal species (fish, algae, microorganisms, etc.) and the fish recolonization creating the real and typical fish population.

The structured build made of concrete, so produced, is completely open for the hydro circulation and for the light contributing the optimal element for the engraftment and the reproduction of nutrients, for the reproduction and the growth of typical species.

In the structured build compatible with the purpose, predisposing cavity- refuge for the embryonic species of the typical fauna.

### Description of the illustrations

tav. 1/8 front view of the "maglia" (element)
tav. 2/8 plan view of the "maglia" (element)
tav. 3/8 the lateral view of the "maglia" (element)
tav. 4/8 use of the "maglia" (element) emerging (not underwater) letter A e underwater letter B
tav. 5/8 use of the "maglia" element in "netting"
tav. 6/8 "maglia" (element) with cave use, emerging the average sea level for the production of energy.
tav.7/8 "maglia"(element) with cave use positioning under the average sea level for the production of energy
tav.8/8 "maglia" (element) use of the typical recolonuzation

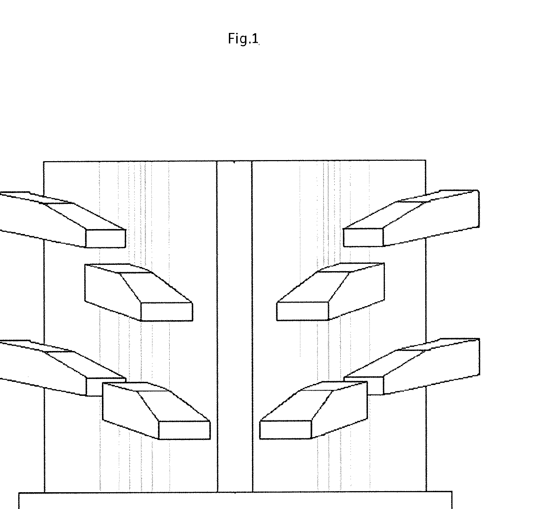

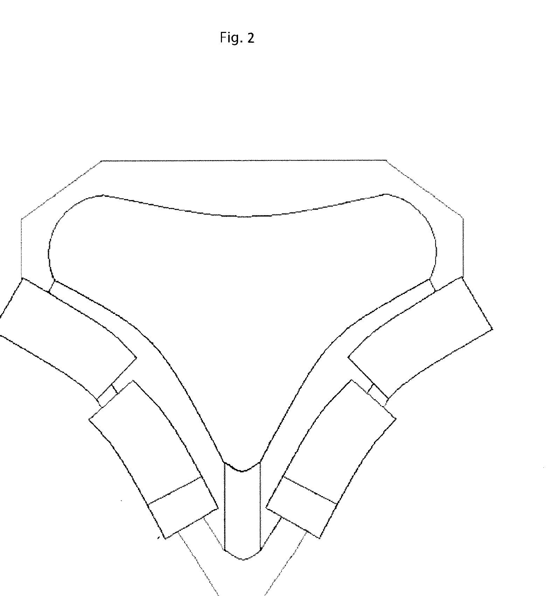

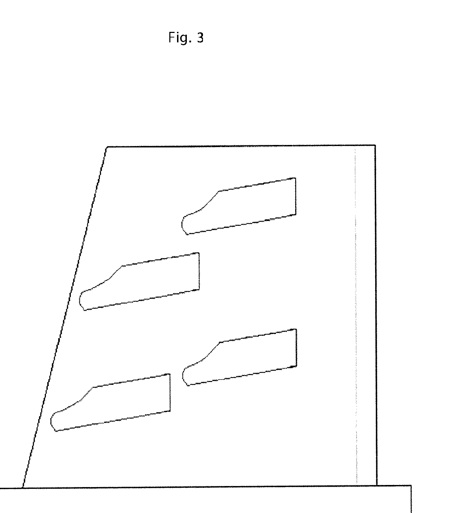

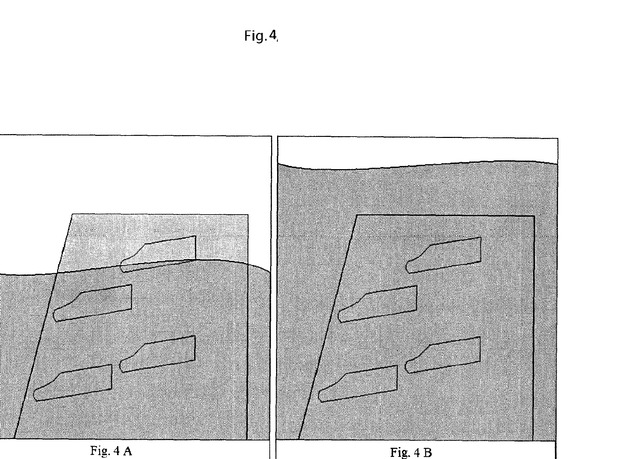

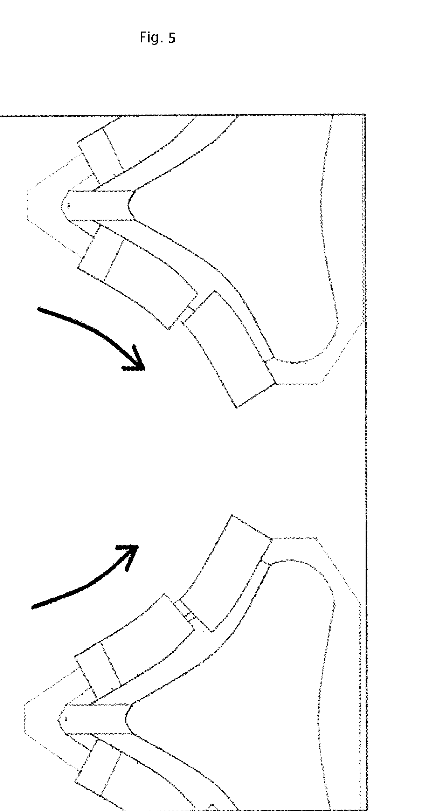

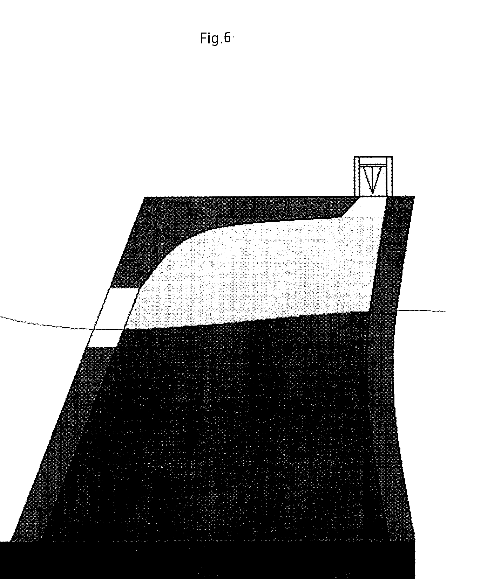

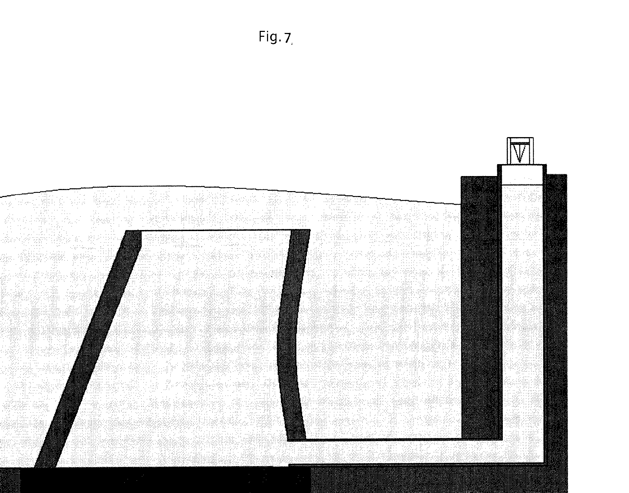

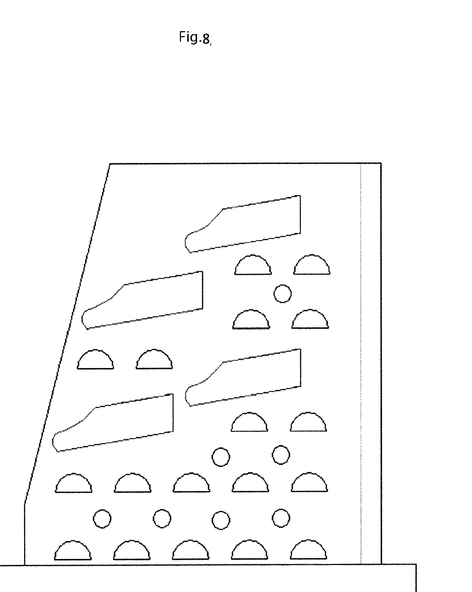

## Claims

1. The three - dimensional, three - lobed structured stereotype (tav.2) named "maglia" (element) **characterized** of a mix of surfaces, protruding from the principal build of the "maglia" (element), then the lateral "fins" dislocated in one or more orders. (tav. 1,3 and 4)

2. The three - dimensional structured stereotype named "maglia" (element), according to claim 1, is **characterized** provoking destructing effects on the liquid bulk of water impinging the stereotype.

3. The three - dimensional structured stereotype named "maglia" (element), according to claim 1 and 2, is **characterized** provoking destructing effects on the liquid bulk impinging the stereotype even more if used in a "netting".

4. The three - dimensional structured stereotype named "maglia" (element), according to claim 1,2,and 3, is **characterized by** the fact using it in a position under water ( under the average sea level) (tav. 4 letter B) or emerging the average sea level ( tav. 4 letter A) attached to the installation "netting" underwater.

5. The three - dimensional structured stereotype named "maglia" (element), according to claim 1,2,3, and 4, is **characterized by** the flexibility of the design appropriately depending on the liquid bulk impinging, with the specials of a bulk propagating in a wave motion, in the difference to the dimensional parameters of the energy impinging.

6. The three - dimensional structured stereotype named "maglia" (element), according to claim 1,2,3, 4 and 5, is **characterized by** constructive versatility, with its isostatic peculiarity in different geological conditions of the sea ground.

7. The three - dimensional structured stereotype named "maglia" (element), according to claim 1,2,3,4,5, and 6, is **characterized by** the presence lateral "fins" protruding the structure in dislocation, number and various dimensions functioning of the peculiarity of the liquid bulk of water impinging, and the wave motion with its specificity meteo - marinal on the sea shore watched the increasing breaking effect on the entire bulk destructering

8. The three - dimensional structured stereotype named "maglia" (element), according to claim 1,2,3,4,5,6 and 7, is **characterized by** a particular application in form of a cave, with an opening used for the production of energy out of the wave motion realized by a column formed out of water in its inner and the arrangement of a turbine at the top.(tav.6)

9. The three - dimensional structured stereotype named "maglia" (element), according to claim 1,2,3,4,5,6,7 and 8, is **characterized by** a particular application (tav.8) with a special longitudinal gravity used for the typical recolonization.

## Amended claims

### Amended claims in accordance with Rule 137(2) EPC.

1. Device for reducing the energy of a moving fluid (10, 10', 10"), comprising:
- a base (1);
- a three-lobed element (2) having three lateral surfaces (3, 3') connected to the base (1);
- a plurality of fins (4) connected to and protruding from two of said lateral surfaces (3);
**characterized in that** said two lateral surfaces (3) connected to said plurality of fins (4) have a curved shape.

2. Device for reducing the energy of a moving fluid (10, 10', 10") according to claim 1, **characterized in that** the fins (4) have a side (5) which is curved and substantially parallel to the lateral surface (3) of the three-lobed element (2) from which the fin (4) protrudes.

3. Device for reducing the energy of a moving fluid (10, 10', 10") according to claim 1 or 2, **characterized in that** the fins (4) are arranged inclined with respect to the base (1).

4. Device for reducing the energy of a moving fluid (10, 10', 10") according to any of the preceding claims, **characterized in that** the fins (4) are arranged in couples on surfaces substantially parallel to each other.

5. Device for reducing the energy of a moving fluid (10, 10', 10") according to any of the preceding claims, **characterized in that** said three-lobed element (2) has a rear surface (3') having a curved shape.

6. Device for reducing the energy of a moving fluid (10, 10', 10") according to any of the preceding claims, **characterized in that** said two lateral surfaces (3) connected to said plurality of fins (4) have a concave shape.

7. Device for reducing the energy of a moving fluid (10, 10', 10") according to any of the preceding claims, **characterized in that** said three-lobed element (2) is realized in a cave form with an opening, said three-lobed element (2) containing an OWC system for generating electric energy.

8. Device for reducing the energy of a moving fluid (10, 10', 10") according to claims 1 to 6, **characterized in that** said three-lobed element (2) is realized in a cave form with a superior opening connected to a channel, said three-lobed element (2) containing an OWC system for generating electric energy.

9. Device for reducing the energy of a moving fluid (10, 10', 10") according to any of the preceding claims, **characterized in that** said three-lobed element (2) comprises a plurality of longitudinal cavity for housing sea plant and/or animals.

10. Method of installation of devices for reducing the energy of a moving fluid (10, 10', 10") according to any of the preceding claims, **characterized in that** the devices (10, 10', 10") are arranged under the fluid or partially emerging the fluid level or completely emerging the fluid level and spaced at a predetermined distance from each other.
